# EUROPEAN PATENT APPLICATION

(11) **EP 4 650 210 A1**
(43) Date of publication of application: **19.11.2025**
(21) Application number: 24175905.9
(22) Date of filing: 15.05.2024
(51) Int. Cl.: B60L 7/10, B60L 7/18, B60L 7/26, B60L 15/20, B60L 58/10, B60L 58/12, B60L 58/16, B60W 30/18, B60W 20/00

(54) **RESERVATION OF ENDURANCE BRAKING ENERGY BUFFER**

(71) Applicant: VOLVO TRUCK CORPORATION, 405 08 Göteborg (SE)
(72) Inventor: HARTH, Virginie, 01600 ST DIDIER DE FORMANS (FR); ANDERSSON, Tobias, 423 38 TORSLANDA (SE)
(74) Representative: Kransell & Wennborg KB

(57) **Abstract**

In an aspect, a computer system (14) is provided comprising processing circuitry (11) configured to determine (S101), by taking into account topography information of a stretch of road (30) to be travelled by a vehicle (10), to which extent service braking (18) can be applied before the service brake of the vehicle (10) is expected to overheat upon travelling said stretch of road (30), and to reserve (S102) an amount of energy (20) to be stored in an energy storage system (15), ESS, of the vehicle (10) for allowing endurance braking (19) of the vehicle (10) to avoid causing overheating of the service brake, wherein the amount of energy (20) being reserved is adapted to the extent to which the service braking (18) is determined to be applied upon the vehicle traveling said stretch of road (30).

## Description

### TECHNICAL FIELD

The disclosure relates generally to managing an energy storage system (ESS) of a vehicle. In particular aspects, the disclosure relates to determining an amount of energy to be reserved in the ESS for allowing endurance braking. The disclosure can be applied in heavy-duty vehicles, such as trucks, buses, cars and construction equipment. Although the disclosure may be described with respect to a particular vehicle, the disclosure is not restricted to any particular vehicle.

### BACKGROUND

To prevent the service brake of a vehicle from overheating during downhill driving, operation of an auxiliary brake referred to as an endurance brake should be secured in the vehicle.

The service brake is friction-based brake, and in order to avoid overheating the service brake, the endurance brake or auxiliary brake, which usually operates by applying resistance via the transmission to the vehicle's wheels, can be applied. The endurance braking may be caused by regenerative braking in the vehicle batteries or in a brake resistor and/or driveline retarder for a battery electrical vehicle (BEV) or fuel cell electric vehicle (FCEV).

Such endurance brake typically requires energy to be activated. For e.g. a BEV, one way to secure performance of the endurance brake is to reserve an energy buffer in the batteries of the vehicle in order to ensure that endurance braking can be performed.

A drawback of reserving this buffer is that the buffer limits the capacity of the battery to be used for propulsion of the vehicle and consequently the distance that the vehicle can travel.

### SUMMARY

According to a first aspect of the disclosure, a computer system is provided comprising processing circuitry configured to determine, by taking into account topography information of a stretch of road to be travelled by a vehicle, to which extent service braking can be applied before the service brake of the vehicle is expected to overheat upon travelling said stretch of road, and to reserve an amount of energy to be stored in an energy storage system (ESS) of the vehicle for allowing endurance braking of the vehicle to avoid causing overheating of the service brake, wherein the amount of energy being reserved is adapted to the extent to which the service braking is determined to be applied upon the vehicle traveling said stretch of road.

The first aspect of the disclosure may seek to resolve an issue of how to adapt reservation of an energy buffer in the ESS of a battery electric vehicle in order to ensure that endurance braking can be performed. A technical benefit may include to improve a range that the vehicle can travel by using the energy for truck propulsion.

In some examples, the processing circuitry is configured to reserve a greater amount of energy for allowing endurance braking upon said topography information indicating that service braking can be applied to a lesser extent before the service brake of the vehicle is expected to overheat upon travelling said stretch of road as compared to said topography information indicating that service braking can be applied to a greater extent before the service brake of the vehicle is expected to overheat upon travelling said stretch of road. A technical benefit may include to adapt the size of the energy buffer to the topography of the stretch of road being travelled.

In some examples, the processing circuitry is configured to reserve a greater amount of energy for allowing endurance braking upon said topography information indicating that the stretch of road has greater downhill inclination as compared to said topography information indicating that the stretch of road has lesser downhill inclination. A technical benefit may include to adapt the size of the energy buffer to the topography of the stretch of road being travelled in that a greater extent of endurance braking typically is required when travelling downhill.

In some examples, the processing circuitry is configured to reserve a greater amount of energy for allowing endurance braking upon said vehicle travelling at a higher speed on said stretch of road as compared to travelling at a lower speed. A technical benefit may include to adapt the size of the energy buffer to the topography of the stretch of road being travelled in that a greater extent of endurance braking typically is required when travelling at a higher speed.

In some examples, the amount of energy not being reserved in the ESS for endurance braking is utilized in the vehicle for purposes other than endurance braking.

In some examples, the processing circuitry is configured to, when performing the determining, acquire a predetermined model which based on topography information of the stretch of road to be travelled by the vehicle indicates to which extent service braking can be applied before the service brake of the vehicle is expected to overheat upon the vehicle travelling said stretch of road. A technical benefit may include that the adaption of the size of the energy buffer becomes more accurate when relying on expected real-world conditions.

In some examples, said model is configured to indicate the extent to which service braking can be applied in the form of a distance that the vehicle can travel along said stretch of road before the service brake of the vehicle is expected to overheat.

In some examples, the model is configured to take into account degree of downhill inclination of the stretch of road to be travelled upon indicating the extent to which service braking can be applied before the service brake of the vehicle is expected to overheat.

In some examples, the model is configured to take into account speed of the vehicle when travelling said stretch of road upon indicating the extent to which service braking can be applied before the service brake of the vehicle is expected to overheat.

In some examples, the processing circuitry is further configured to control that the amount of energy reserved in the ESS for endurance braking is not used for purposes other than endurance braking.

In some examples, a service braking threshold temperature is set indicating at which temperature the service brake is considered to be overheated.

In some examples, the processing circuitry is further being configured to harvest energy during the performing of the endurance braking, which harvested energy is restored in the ESS and reserved for endurance braking. A technical benefit may include to extend a range that the vehicle can travel before having to recharge the ESS.

In some examples,, the processing circuitry is further configured to take into account one or more of vehicle-specific information affecting service braking in the form of weight, number of wheel axles, braking system, type of motor, historical braking behavior of a driver of the vehicle, battery health, current traffic information in the form of traffic stockings or weather conditions for determining to which extent service braking can be applied before the service brake of the vehicle is expected to overheat upon travelling said stretch of road.

In some examples, a vehicle is provided comprising the computer system of the first aspect.

According to a second aspect of the disclosure, a computer-implemented method, comprising determining, by taking into account topography information of a stretch of road to be travelled by a vehicle, to which extent service braking can be applied before the service brake of the vehicle is expected to overheat upon travelling said stretch of road, and reserving an amount of energy to be stored in an ESS of the vehicle for allowing endurance braking of the vehicle to avoid causing overheating of the service brake, wherein the amount of energy being reserved is adapted to the extent to which the service braking is determined to be applied upon the vehicle traveling said stretch of road.

In some examples, a greater amount of energy is reserved for allowing endurance braking upon said topography information indicating that service braking can be applied to a lesser extent before the service brake of the vehicle is expected to overheat upon travelling said stretch of road as compared to said topography information indicating that service braking can be applied to a greater extent before the service brake of the vehicle is expected to overheat upon travelling said stretch of road.

In some examples, a greater amount of energy is reserved for allowing endurance braking upon said topography information indicating that the stretch of road has greater downhill inclination as compared to said topography information indicating that the stretch of road has lesser downhill inclination.

In some examples, a greater amount of energy is reserved for allowing endurance braking upon said vehicle travelling at a higher speed on said stretch of road as compared to travelling at a lower speed.

In some examples, a computer program product is provided comprising program code for performing, when executed by the processing circuitry, the method of the second aspect.

In some examples, a non-transitory computer-readable storage medium is provided comprising instructions which when executed by the processing circuitry cause the processing circuitry to perform the method of the second aspect.

The above aspects, accompanying claims, and/or examples disclosed herein above and later below may be suitably combined with each other as would be apparent to anyone of ordinary skill in the art.

Additional features and advantages are disclosed in the following description, claims, and drawings, and in part will be readily apparent therefrom to those skilled in the art or recognized by practicing the disclosure as described herein. There are also disclosed herein control units, computer readable media, and computer program products associated with the above discussed technical benefits.

### BRIEF DESCRIPTION OF THE DRAWINGS

With reference to the appended drawings, below follows a more detailed description of aspects of the disclosure cited as examples.
FIG. 1 illustrates a vehicle in the form of a truck in which examples of the present disclosure may be implemented.
FIG. 2 shows an exemplary system diagram of a computer system with which the truck of FIG. 1 is equipped according to the present disclosure.
FIG. 3a-c illustrate different examples of level of charging of a battery.
FIG. 4 shows a flowchart illustrating an example of determining an amount of energy to be reserved in a battery for allowing endurance braking according to the present disclosure.
FIG. 5a-c illustrate different stretches of road to be travelled, the stretches having varying downhill inclinations according to the present disclosure.
FIG. 6 is a schematic diagram of a computer system for implementing examples disclosed herein.

### DETAILED DESCRIPTION

Aspects set forth below represent the necessary information to enable those skilled in the art to practice the disclosure.

To prevent the service brake of a vehicle from overheating during downhill driving, operation of an auxiliary brake referred to as an endurance brake should be secured in the vehicle. In other words, in order to avoid the service brake overheating - the service brake being a friction-based brake - the endurance brake or auxiliary brake, which usually operates by applying resistance via the transmission to the vehicle's driven wheels, can be applied. The endurance braking may be caused by regenerative braking in the vehicle batteries or in a brake resistor and/or driveline retarder for a BEV or FCEV. Such endurance brake typically requires energy to be activated. For e.g. a BEV, one way to secure performance of the endurance brake is to reserve an energy buffer in the batteries in order to ensure that endurance braking can be performed. A drawback of reserving this energy buffer is that the buffer limits the capacity of the battery and consequently the distance that the vehicle can travel.

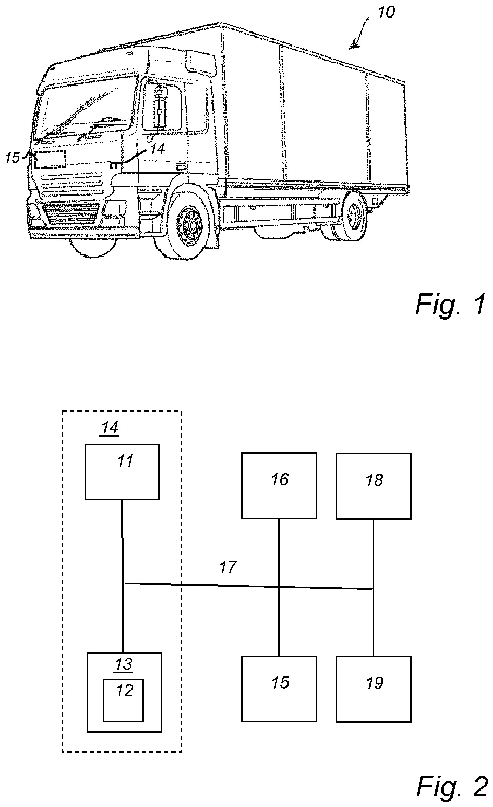

FIG. 1 illustrates a vehicle in the form of a truck 10 in which examples of the present disclosure may be implemented, the truck 10 being equipped with a computer system 14 exemplified in the form of a so-called Electronic Control Unit (ECU) for controlling operation of the truck 10. The ECU 14 is typically in communicative connection with an energy storage system (ESS) 15 arranged to provide electric energy for propulsion of the truck 10. The ESS 15 typically comprises one or more batteries (sometimes referred to as battery packs) for providing the electric energy.

Although the truck 10 in FIG. 1 is depicted as a heavy-duty truck, examples of the present disclosure may be implemented in other types of vehicles, such as in passenger cars, busses, light-weight trucks, mid-weight trucks, construction equipment, motorcycles, etc.

FIG. 2 shows an exemplary system diagram of the computer system 14 with which the truck 10 of FIG. 1 is equipped according to the present disclosure. The computer system 14 will in the following be exemplified by the ECU.

The ECU 14 generally comprises processing circuitry 11 embodied in the form of one or more microprocessors arranged to execute a computer program (SW) 12 downloaded to a storage medium (Mem) 13 associated with the microprocessor, such as a Random Access Memory (RAM), a Flash memory or a hard disk drive. The processing circuitry 11 is arranged to cause the ECU 14 to perform desired operations when the appropriate computer program 12 comprising computer-executable instructions is downloaded to the storage medium 13 and executed by the processing circuitry 11. The storage medium 13 may also be a computer program product comprising the computer program 12. Alternatively, the computer program 12 may be transferred to the storage medium 13 by means of a suitable computer program product, such as a Digital Versatile Disc (DVD) or a memory stick. As a further alternative, the computer program 12 may be downloaded to the storage medium 13 over a network. The processing circuitry 11 may alternatively be embodied in the form of a digital signal processor (DSP), an application specific integrated circuit (ASIC), a field-programmable gate array (FPGA), a complex programmable logic device (CPLD), etc. The processing circuitry 11 will in the following be referred to as a central processing unit (CPU).

Further shown in FIG. 2 is the ESS 15 which may be controlled by the ECU 14 either directly or via a battery management system (BMS) 16.

Communication between the various components illustrated in FIG. 2 may occur via an electronic communication bus 17 such as e.g., a Controller Area Network (CAN) bus, a Local Interconnect Network (LIN) bus, an Ethernet bus, etc. Shown in FIG. 2 is further components providing service brake (SB) functionality 18 and endurance brake (EB) functionality 19.

As previously mentioned, one way for a battery electric vehicle (such as the truck 10) to secure performance of the endurance brake 19 is to reserve an energy buffer in the ESS 15 in order to ensure that endurance braking can be performed. A drawback of reserving this energy buffer is that the buffer limits the capacity of the ESS 15 and consequently the distance that the truck 10 can travel, since the reserved endurance braking energy buffer cannot be used for truck propulsion.

To resolve this issue, a method and system is provided according to an example of the present disclosure being configured to determine to which extent service braking can be applied before the service brake 18 of the vehicle 10 is expected to overheat upon travelling a stretch of road and adapt the endurance braking energy buffer accordingly. The ESS 15 in which the endurance braking energy buffer is referred will in the following occasionally be referred to as a battery.

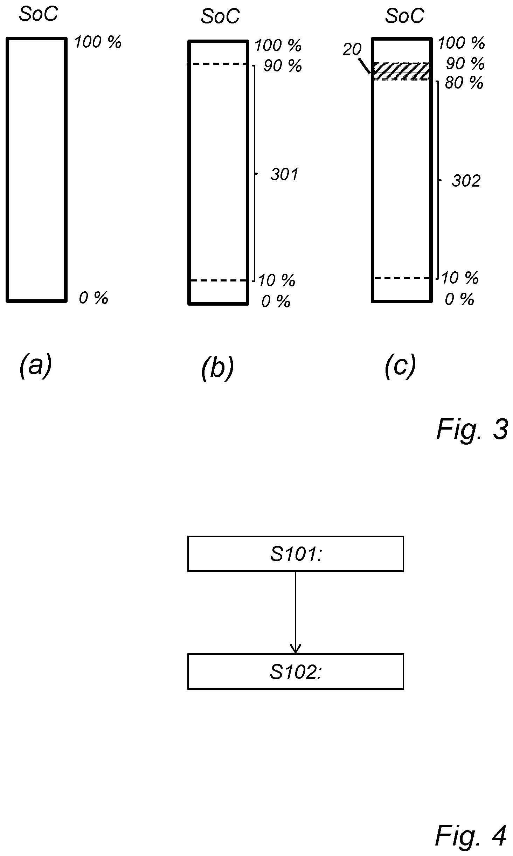

FIG. 3a illustrates state of charge (SoC) of a battery which represents remaining energy capacity available in the battery at a certain time, where 0% indicates an empty battery while 100% indicates a fully charged battery.

FIG. 3b illustrates the SoC of the battery 15 of an electric vehicle such as the truck 10.

In order to increase lifetime of a battery cell, the so-called usable SoC window 301 should be set to be smaller than 100%. For instance, the upper SoC level may be limited to 90% while the lower SoC level is limited to 10%. In other words, the battery 15 of the truck 10 should preferably not be charged to have an SoC of more than 90% and should not be discharged to an SoC of less than 10% (which also avoids the battery of the truck 10 becoming totally empty)

However, a drawback as compared to FIG. 3a is that the usable capacity of the battery 15 in FIG. 3b is reduced by 20% resulting in a total useable SoC of 80%. As is understood, the upper and lower SoC limit - and thus the usable SoC window 301 - may be adjusted depending on the specific requirements.

FIG. 3c illustrates the SoC of the battery 15 when further taking into account that an energy buffer 20 is reserved to ensure that endurance braking can be performed by the truck 10. In this example, a further 10% of the SoC is reserved for endurance braking as indicated by the striped section of the SoC window. Thus, the useable SoC window 302 of FIG. 3c amounts to 70%.

FIG. 4 shows a flowchart illustrating an example of the present disclosure of determining to which extent service braking can be applied before the service brake 18 of the vehicle 10 is expected to overheat upon travelling a stretch of road and adapt the endurance braking energy buffer accordingly.

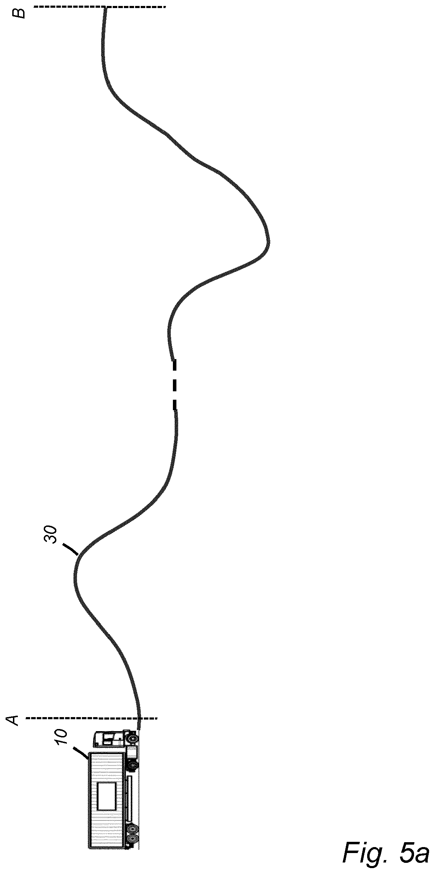

Hence, before the truck 10 is operated to travel a given stretch of road 30 extending between points A and B as indicated in FIG.5a, the ECU 14 will determine in S101, e.g. from a model stored in the memory 13, to which extent the service brake 18 of the truck 10 can be applied when travelling from A to B before the service brake is expected to overheat, and based on this determine how much energy 20 should be reserved in the battery 15 in S 102 to allow the truck 10 to at least occasionally perform endurance braking in order to avoid the service brake overheating. As is understood, the truck 10 may be autonomous, semi-autonomous and/or provided with a cruise control system, or manually operated.

For instance, the ECU 14 may be provided with a model where assuming that for a particular road to be travelled, such as the particular stretch of road 30 between points A and B illustrated in FIG. 5a, (a) topography information such as inclination of a downhill slope of the road is taken into account along with one or more of (b) information specifying expected speed of the truck 10, (c) truck-specific information affecting braking, such as weight, number of wheels axles, braking system, type of motor, etc., (d) historical braking behavior of a driver of the truck 10, (e) battery health, where e.g. new batteries generally need a smaller buffer than old batteries, (f) any current traffic information indicating e.g. traffic stockings, weather conditions, etc., for determining to which extent service braking can be applied during travelling between points A and B before overheating of the service brake is expected to occur.

For instance, if the driver historically has been known to use the service brake 18 fluently, then a greater amount of energy 20 must likely be reserved for allowing endurance braking 19. In another example, a braking system causing greater heat development may result in a greater amount of energy 20 being reserved for allowing endurance braking 19. In yet an example, traffic stockings may result in the service braking 18 being applied to a lesser extent, in which case a lesser amount of energy 20 typically is reserved for allowing endurance braking 19.

Thus, assuming that for the road 30 to be travelled by the truck 10 extending between points A and B as illustrated in FIG. 5a, the model to which the ECU 14 has access will in S 101 specify, based on at least topology information of the road, to which extent the service brake of the truck 10 can be applied before the service brake is expected to overheat.

Assuming for instance that the road extending between points A and B comprises steep downhill slopes and/or that the expected speed to be held when traveling the road is relatively high (such as for instance an average speed of 80 km/h rather than, say, 60 km/h), the amount of energy to be buffered 20 in the battery 15 for allowing endurance braking will be relatively large, such as corresponding to 10% of the total SoC window as illustrated in FIG. 3c, since the service brake 18 is expected to overheat unless the endurance brake 19 at least occasionally is applied between points A and B in order to offload the service brake.

For instance, assuming that the distance between A and B is 100 km but that the model in S 101 indicates that the service brake is expected to be applied to such high extent that overheating of the service brake will occur when the truck 10 has travelled, say, 80 km. If so, the determined amount of energy to be reserved in the battery 15 in S 102 is expected to amount to 10%.

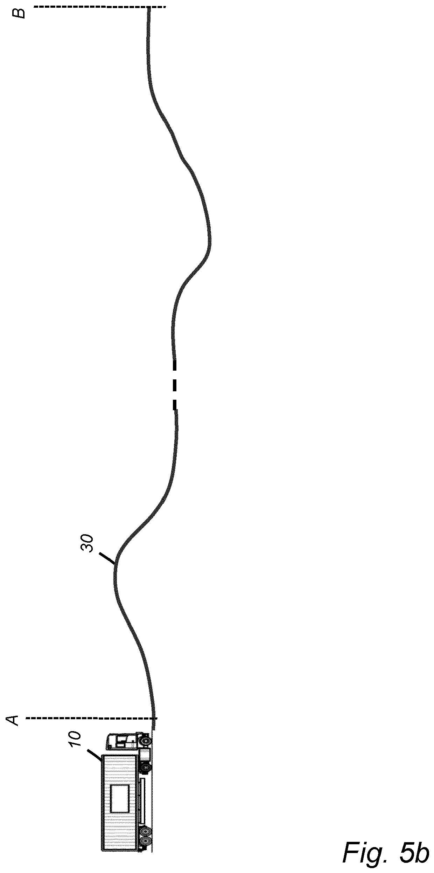

To the contrary, with reference to FIG. 5b, if there are few and/or slightly declining downhill slopes and/or the expected speed to be held when traveling the road is relatively low (such as for instance an average speed of 50 km/h), the amount of energy to be buffered in the battery 15 in S 102 for allowing endurance braking will be relatively small, such as e.g. around 2%, since the service brake indeed can be used to a great extent without the risk of being overheated and therefore endurance braking can be sparsely applied.

Hence, assuming that the distance between A and B is 100 km but that the model in this case indicates in S101 that the service brake will be applied to a far lower extent where overheating of the service brake is expected to occur only after the truck 10 has travelled, say, 95 km. If so, a lower amount of energy is reserved in the battery 15 in S 102 for endurance braking, in this example 2%.

As a result, the usable SoC window will in the latter example advantageously amount to 78% while in the former example, the usable SoC window amounts to 70% (given that the upper and lower limits of the useable SoC window is set to 90% and 10%, respectively).

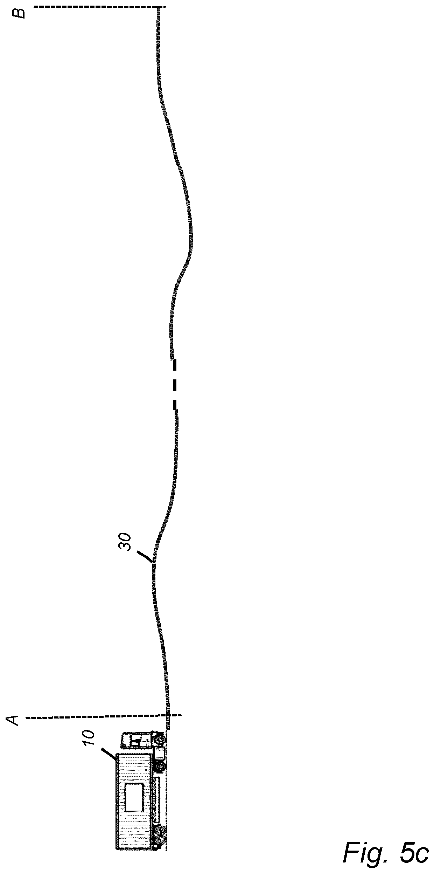

In an ideal example where the stretch of road 30 is flat, as illustrated in FIG. 5c, it may be envisaged that no energy buffer 20 at all is held in the battery 15 for enabling endurance braking - since the extent to which service braking will be applied is expected to be low and there is thus no, or very low, risk of overheating the service brake 18 - in which case the usable SoC window advantageously will increase to 80% (again assuming that the upper SoC limit is set to 90% and the lower SoC limit is set to 10%), since the model in this ideal example indicates that the truck 10 can travel 100 km or more without the service brake overheating.

Advantageously, with these examples of the present disclosure, the truck 10 can consume the energy stored in the battery 15 for any appropriate purpose, which energy otherwise would be reserved for the endurance braking.

Hence, in an example, the ECU 14 will control that the amount of energy 20 reserved in the battery 15 is not used for other purposes than endurance braking, such as e.g. propulsion of the vehicle, air condition, lighting, etc.

In an example, a service braking threshold temperature is set which the temperature of the service brake is not allowed to exceed. If so, the service brake is considered to be overheated.

Table 1 below illustrates an example of a model based on which it may be determined in S101 to which extent service braking can be applied before the service brake of the truck 10 is expected to overheat in different scenarios for particular vehicle type.

| | | | | | |
|---|---|---|---|---|---|
| Slope (degrees) | 0.5 | 1000 | 1000 | 1000 | 1000 |
| | 1.5 | 28 | 27 | 26 | 25 |
| | 2.5 | 9.6 | 8.6 | 7.9 | 7.6 |
| | 3.5 | 5.8 | 5.1 | 4.6 | 4.2 |
| | | 60 | 70 | 80 | 90 |
| | | Speed | | (km/h) | |

Table 1. Model indicating to which extent service braking can be applied before overheating is expected to occur for a given vehicle type.

Table 1 illustrates that for downhill slopes having greater inclination on a stretch of road being traveled, and/or higher speeds of the vehicle, 10 the distance than can be travelled is shorter before the service brake is expected to overheat. In other words, the extent to which service braking can be applied with risking service brake overheating is lesser for great downhill inclinations and/or higher speeds.

For instance, with reference to Table 1:
- for a road having a slope of 0.5°, the truck 10 can travel a 1000 km or more without the service brake being expected to be overheated, regardless of whether the speed of the truck is, 60, 70, 80 or 90 km/h;
- for a road having a slope of 1.5°, the truck 10 can travel 28, 27, 26 and 25 km at speeds of 60, 70, 80 or 90 km/h, respectively, before the service brake is expected to be overheated;
- for a road having a slope of 2.5°, the truck 10 can travel 9.6, 8.6, 7.9 and 7.6 km at speeds of 60, 70, 80 or 90 km/h, respectively, before the service brake is expected to be overheated; and finally
- for a road having a slope of 3.5°, the truck 10 can travel 5.8, 5.1, 4.6 and 4.2 km at speeds of 60, 70, 80 or 90 km/h, respectively, before the service brake is expected to be overheated.

In other words, from a general point of view, the greater the downhill slope of the road, the lesser the extent of service braking that can be applied before the service brake of the truck 10 is expected to overheat. Thus, greater downhill slopes generally require more energy to be reserved in the battery 15 for allowing endurance braking in order to avoid the service brake overheating.

Further, from a general point of view, the higher the speed of the truck 10, the lesser the extent of service braking that can be applied before the service brake of the truck 10 is expected to overheat. Hence, higher speeds generally require more energy to be reserved in the battery 15 for allowing endurance braking in order to avoid the service brake overheating.

As is understood, the model being utilized is typically adapted to the particular truck type. For example, service braking can be applied to a lesser extent for a heavy truck than for a light truck. Therefore, each type of vehicle will typically have its own model.

In an example, it may be envisaged that regenerative braking continuously is applied to restore energy consumed in the energy buffer 20 reserved for endurance braking. Thus, when performing endurance braking, electricity may be harvested from the motor of the truck 10 and then restored in the buffer 20 of the battery 15.

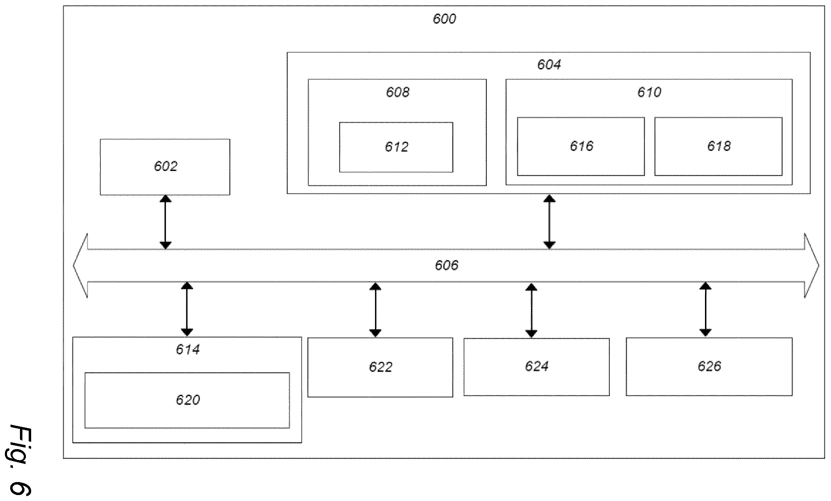

FIG. 6 is a schematic diagram of a computer system 600 for implementing examples disclosed herein. The computer system 600 is adapted to execute instructions from a computer-readable medium to perform these and/or any of the functions or processing described herein. The computer system 600 may be connected (e.g., networked) to other machines in a LAN, an intranet, an extranet, or the Internet. While only a single device is illustrated, the computer system 600 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 600 may comprise at least one computing device or electronic device capable of including firmware, hardware, and/or executing software instructions to implement the functionality described herein. The computer system 600 may include a processor device 602 (may also be referred to as a control unit), a memory 604, and a system bus 606. The computer system 600 may include at least one computing device having the processor device 602. The system bus 606 provides an interface for system components including, but not limited to, the memory 604 and the processor device 602. The processor device 602 may include any number of hardware components for conducting data or signal processing or for executing computer code stored in memory 604. The processor device 602 (e.g., control unit) may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processor device may further include computer executable code that controls operation of the programmable device.

The system bus 606 may be any of several types of bus structures that may further interconnect to a memory bus (with or without a memory controller), a peripheral bus, and/or a local bus using any of a variety of bus architectures. The memory 604 may be one or more devices for storing data and/or computer code for completing or facilitating methods described herein. The memory 604 may include database components, object code components, script components, or other types of information structure for supporting the various activities herein. Any distributed or local memory device may be utilized with the systems and methods of this description. The memory 604 may be communicably connected to the processor device 602 (e.g., via a circuit or any other wired, wireless, or network connection) and may include computer code for executing one or more processes described herein. The memory 604 may include non-volatile memory 608 (e.g., read-only memory (ROM), erasable programmable read-only memory (EPROM), electrically erasable programmable read-only memory (EEPROM), etc.), and volatile memory 610 (e.g., random-access memory (RAM)), or any other medium which can be used to carry or store desired program code in the form of machine-executable instructions or data structures and which can be accessed by a computer or other machine with a processor device 602. A basic input/output system (BIOS) 612 may be stored in the non-volatile memory 608 and can include the basic routines that help to transfer information between elements within the computer system 600.

The computer system 600 may further include or be coupled to a non-transitory computer-readable storage medium such as the storage device 614, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 614 and other drives associated with computer-readable media and computer-usable media may provide non-volatile storage of data, data structures, computer-executable instructions, and the like.

A number of modules can be implemented as software and/or hard-coded in circuitry to implement the functionality described herein in whole or in part. The modules may be stored in the storage device 614 and/or in the volatile memory 610, which may include an operating system 616 and/or one or more program modules 618. All or a portion of the examples disclosed herein may be implemented as a computer program product 620 stored on a transitory or non-transitory computer-usable or computer-readable storage medium (e.g., single medium or multiple media), such as the storage device 614, which includes complex programming instructions (e.g., complex computer-readable program code) to cause the processor device 602 to carry out actions described herein. Thus, the computer-readable program code can comprise software instructions for implementing the functionality of the examples described herein when executed by the processor device 602. The processor device 602 may serve as a controller or control system for the computer system 600 that is to implement the functionality described herein.

The computer system 600 also may include an input device interface 622 (e.g., input device interface and/or output device interface). The input device interface 622 may be configured to receive input and selections to be communicated to the computer system 600 when executing instructions, such as from a keyboard, mouse, touch-sensitive surface, etc. Such input devices may be connected to the processor device 602 through the input device interface 622 coupled to the system bus 606 but can be connected through other interfaces such as a parallel port, an Institute of Electrical and Electronic Engineers (IEEE) 1394 serial port, a Universal Serial Bus (USB) port, an IR interface, and the like. The computer system 600 may include an output device interface 624 configured to forward output, such as to a display, a video display unit (e.g., a liquid crystal display (LCD) or a cathode ray tube (CRT)). The computer system 600 may also include a communications interface 626 suitable for communicating with a network as appropriate or desired.

Example 1. A computer system (14) comprising processing circuitry (11) configured to:
determine (S 101), by taking into account topography information of a stretch of road (30) to be travelled by a vehicle (10), to which extent service braking (18) can be applied before the service brake of the vehicle (10) is expected to overheat upon travelling said stretch of road (30); and to
reserve (S102) an amount of energy (20) to be stored in an energy storage system (15), ESS, of the vehicle (10) for allowing endurance braking (19) of the vehicle (10) to avoid causing overheating of the service brake, wherein the amount of energy (20) being reserved is adapted to the extent to which the service braking (18) is determined to be applied upon the vehicle traveling said stretch of road (30).

Example 2. The computer system (14) of example 1, the processing circuitry (11) being configured to reserve (S102) a greater amount of energy (20) for allowing endurance braking (19) upon said topography information indicating that service braking (18) can be applied to a lesser extent before the service brake of the vehicle (10) is expected to overheat upon travelling said stretch of road (30) as compared to said topography information indicating that service braking (18) can be applied to a greater extent before the service brake of the vehicle (10) is expected to overheat upon travelling said stretch of road (30);

Example 3. The computer system (14) of examples 1 or 2, the processing circuitry (11) being configured to reserve (S102) a greater amount of energy (20) for allowing endurance braking (19) upon said topography information indicating that the stretch of road (30) has greater downhill inclination as compared to said topography information indicating that the stretch of road (30) has lesser downhill inclination.

Example 4. The computer system (14) of any one of examples 1-3, the processing circuitry (11) being configured to reserve (S102) a greater amount of energy (20) for allowing endurance braking (19) upon said vehicle (10) travelling at a higher speed on said stretch of road (30) as compared to travelling at a lower speed.

Example 5. The computer system (14) of any one of the preceding examples, wherein the amount of energy not being reserved in the ESS (15) for endurance braking is utilized in the vehicle (10) for purposes other than endurance braking.

Example 6. The computer system (14) of any one of the preceding examples, the processing circuitry (11) being configured to, when performing the determining (S101);
acquire a predetermined model which based on topography information of the stretch of road (30) to be travelled by the vehicle (10) indicates to which extent service braking (18) can be applied before the service brake of the vehicle (10) is expected to overheat upon the vehicle (10) travelling said stretch of road (30).

Example 7. The computer system (14) of example 6, said model being configured to indicate the extent to which service braking (18) can be applied in the form of a distance that the vehicle (10) can travel along said stretch of road (30) before the service brake of the vehicle (10) is expected to overheat.

Example 8. The computer system (14) of examples 6 or 7, the model being configured to take into account degree of downhill inclination of the stretch of road (30) to be travelled upon indicating the extent to which service braking (18) can be applied before the service brake of the vehicle (10) is expected to overheat.

Example 9. The computer system (14) of any one of examples 6-8, the model being configured to take into account speed of the vehicle (10) when travelling said stretch of road (30) upon indicating the extent to which service braking (18) can be applied before the service brake of the vehicle (10) is expected to overheat.

Example 10. The computer system (14) of any one of the preceding examples, the processing circuitry (11) further being configured to control that the amount of energy (20) reserved in the ESS (15) for endurance braking (19) is not used for purposes other than endurance braking.

Example 11. The computer system (14) of any one of the preceding examples, wherein a service braking threshold temperature is set indicating at which temperature the service brake (18) is considered to be overheated.

Example 12. The computer system (14) of any one of the preceding examples, the processing circuitry (11) further being configured to harvest energy during the performing of the endurance braking (19), which harvested energy is restored in the ESS (15) and reserved for endurance braking.

Example 13. The computer system (14) of any one of the preceding examples, the processing circuitry (11) further being configured to take into account one or more of vehicle-specific information affecting service braking in the form of weight, number of wheel axles, braking system, type of motor, historical braking behavior of a driver of the vehicle (10), battery health, current traffic information in the form of traffic stockings or weather conditions for determining to which extent service braking (18) can be applied before the service brake of the vehicle (10) is expected to overheat upon travelling said stretch of road (30);

Example 14. A vehicle (10) comprising the computer system (14) of any of examples 1-13.

Example 15. A computer-implemented method, comprising:
determining (S101), by taking into account topography information of a stretch of road (30) to be travelled by a vehicle (10), to which extent service braking (18) can be applied before the service brake of the vehicle (10) is expected to overheat upon travelling said stretch of road (30); and
reserving (S102) an amount of energy (20) to be stored in an energy storage system (15), ESS, of the vehicle (10) for allowing endurance braking (19) of the vehicle (10) to avoid causing overheating of the service brake, wherein the amount of energy (20) being reserved is adapted to the extent to which the service braking (18) is determined to be applied upon the vehicle traveling said stretch of road (30).

Example 16. The computer-implemented method of example 15, wherein a greater amount of energy (20) is reserved (S102) for allowing endurance braking (19) upon said topography information indicating that service braking (18) can be applied to a lesser extent before the service brake of the vehicle (10) is expected to overheat upon travelling said stretch of road (30) as compared to said topography information indicating that service braking (18) can be applied to a greater extent before the service brake of the vehicle (10) is expected to overheat upon travelling said stretch of road (30);

Example 17. The computer-implemented method of examples 15 or 16, wherein a greater amount of energy (20) is reserved (S102) for allowing endurance braking (19) upon said topography information indicating that the stretch of road (30) has greater downhill inclination as compared to said topography information indicating that the stretch of road (30) has lesser downhill inclination.

Example 18. The computer-implemented method of any one of examples 15-17, wherein a greater amount of energy (20) is reserved (S102) for allowing endurance braking (19) upon said vehicle (10) travelling at a higher speed on said stretch of road (30) as compared to travelling at a lower speed.

Example 19. A computer program product comprising program code (13) for performing, when executed by the processing circuitry (11), the method of example 18.

Example 20. A non-transitory computer-readable storage medium (12) comprising instructions (13) which when executed by the processing circuitry (11) cause the processing circuitry (11) to perform the method of example 18.

The operations described in any of the exemplary aspects herein are described to provide examples and discussion. The operations may be performed by hardware components, may be embodied in machine-executable instructions to cause a processor to perform the operations, or may be performed by a combination of hardware and software. Although a specific order of operations may be shown or described, the order of the operations may differ. In addition, two or more operations may be performed concurrently or with partial concurrence.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, operations, elements, and/or components, but do not preclude the presence or addition of one or more other features, integers, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the inventive concepts being set forth in the following claims.

## Claims

1. A computer system (14) comprising processing circuitry (11) configured to:
determine (S101), by taking into account topography information of a stretch of road (30) to be travelled by a vehicle (10), to which extent service braking (18) can be applied before the service brake of the vehicle (10) is expected to overheat upon travelling said stretch of road (30); and to
reserve (S102) an amount of energy (20) to be stored in an energy storage system (15), ESS, of the vehicle (10) for allowing endurance braking (19) of the vehicle (10) to avoid causing overheating of the service brake, wherein the amount of energy (20) being reserved is adapted to the extent to which the service braking (18) is determined to be applied upon the vehicle traveling said stretch of road (30).

2. The computer system (14) of claim 1, the processing circuitry (11) being configured to reserve (S102) a greater amount of energy (20) for allowing endurance braking (19) upon said topography information indicating that service braking (18) can be applied to a lesser extent before the service brake of the vehicle (10) is expected to overheat upon travelling said stretch of road (30) as compared to said topography information indicating that service braking (18) can be applied to a greater extent before the service brake of the vehicle (10) is expected to overheat upon travelling said stretch of road (30);

3. The computer system (14) of claims 1 or 2, the processing circuitry (11) being configured to reserve (S102) a greater amount of energy (20) for allowing endurance braking (19) upon said topography information indicating that the stretch of road (30) has greater downhill inclination as compared to said topography information indicating that the stretch of road (30) has lesser downhill inclination.

4. The computer system (14) of any one of claims 1-3, the processing circuitry (11) being configured to reserve (S102) a greater amount of energy (20) for allowing endurance braking (19) upon said vehicle (10) travelling at a higher speed on said stretch of road (30) as compared to travelling at a lower speed.

5. The computer system (14) of any one of the preceding claims, the processing circuitry (11) being configured to, when performing the determining (S101);
acquire a predetermined model which based on topography information of the stretch of road (30) to be travelled by the vehicle (10) indicates to which extent service braking (18) can be applied before the service brake of the vehicle (10) is expected to overheat upon the vehicle (10) travelling said stretch of road (30).

6. The computer system (14) of claim 5, said model being configured to indicate the extent to which service braking (18) can be applied in the form of a distance that the vehicle (10) can travel along said stretch of road (30) before the service brake of the vehicle (10) is expected to overheat.

7. The computer system (14) of claims 5 or 6, the model being configured to take into account degree of downhill inclination of the stretch of road (30) to be travelled upon indicating the extent to which service braking (18) can be applied before the service brake of the vehicle (10) is expected to overheat.

8. The computer system (14) of any one of claims 5-7, the model being configured to take into account speed of the vehicle (10) when travelling said stretch of road (30) upon indicating the extent to which service braking (18) can be applied before the service brake of the vehicle (10) is expected to overheat.

9. The computer system (14) of any one of the preceding claims, wherein a service braking threshold temperature is set indicating at which temperature the service brake (18) is considered to be overheated.

10. The computer system (14) of any one of the preceding claims, the processing circuitry (11) further being configured to harvest energy during the performing of the endurance braking (19), which harvested energy is restored in the ESS (15) and reserved for endurance braking.

11. The computer system (14) of any one of the preceding claims, the processing circuitry (11) further being configured to take into account one or more of vehicle-specific information affecting service braking in the form of weight, number of wheel axles, braking system, type of motor, historical braking behavior of a driver of the vehicle (10), battery health, current traffic information in the form of traffic stockings or weather conditions for determining to which extent service braking (18) can be applied before the service brake of the vehicle (10) is expected to overheat upon travelling said stretch of road (30);

12. A vehicle (10) comprising the computer system (14) of any of claims 1-11.

13. A computer-implemented method, comprising:
determining (S101), by taking into account topography information of a stretch of road (30) to be travelled by a vehicle (10), to which extent service braking (18) can be applied before the service brake of the vehicle (10) is expected to overheat upon travelling said stretch of road (30); and
reserving (S102) an amount of energy (20) to be stored in an energy storage system (15), ESS, of the vehicle (10) for allowing endurance braking (19) of the vehicle (10) to avoid causing overheating of the service brake, wherein the amount of energy (20) being reserved is adapted to the extent to which the service braking (18) is determined to be applied upon the vehicle traveling said stretch of road (30).

14. A computer program product comprising program code (13) for performing, when executed by the processing circuitry (11), the method of claim 13.

15. A non-transitory computer-readable storage medium (12) comprising instructions (13) which when executed by the processing circuitry (11) cause the processing circuitry (11) to perform the method of claim 13.
